Europäisches Patentamt

European Patent Office

Office européen des brevets

(11) Veröffentlichungsnummer : **0 134 299**
B1

(12) EUROPÄISCHE PATENTSCHRIFT

(45) Veröffentlichungstag der Patentschrift :
19.08.87

(51) Int. Cl.⁴ : **F 16 D   3/50**, F 16 D  13/68

(21) Anmeldenummer : 83109087.3

(22) Anmeldetag : 14.09.83

(54) Drehelastische Kupplung mit verbesserter Kennlinie.

(43) Veröffentlichungstag der Anmeldung :
20.03.85 Patentblatt 85/12

(45) Bekanntmachung des Hinweises auf die Patenterteilung : 19.08.87 Patentblatt 87/34

(84) Benannte Vertragsstaaten :
AT BE CH DE FR GB IT LI NL SE

(56) Entgegenhaltungen :
FR-A-   450 983
GB-A- 2 097 099
US-A- 4 300 363

(73) Patentinhaber : WOCO Franz-Josef Wolf & Co.
Sprudelallee 19
D-6483 Bad Soden-Salmünster (DE)

(72) Erfinder : Wolf, Franz-Josef
Sprudelallee 19
D-6483 Bad Soden-Salmünster (DE)
Erfinder : Pietsch, Hubert
Am Quellenrain 13
D-6483 Bad Soden-Salmünster (DE)

(74) Vertreter : Jaeger, Klaus, Dipl.-Chem. Dr. et al
JAEGER & PARTNER Patentanwälte Pippinplatz 4a
D-8035 Gauting (DE)

## Beschreibung

Die Erfindung betrifft eine drehelastische Kupplung, bei der zwei gegeneinander verdrehbare Kupplungshälften über mindestens ein federndes Zwischenglied und, unter Bezug auf den Kraftleitungsweg durch die Kupplung, in Serie zu diesem federnden Zwischenglied über mindestens ein eine Rotation in eine Translation oder umgekehrt eine Translation in eine Rotation umsetzendes bewungsumsetzendes Zwischenglied kraftleitend miteinander verbunden sind, und mit mindestens einem Auflagerblech, das radial außen auf mindestens einem radial innen kraftschlüssig abgestützten und mit einer ersten der beiden Kupplungshälften verbundenen federnden Zwischenglied aufliegt und an dem das bewegungsumsetzende Zwischenglied direkt oder über mindestens ein Koppelglied translatorisch oder zumindest im wesentlichen translatorisch in der Weise angelenkt ist, daß das Auflagerblech bei einer auf die erste Kupplungshälfte bezogenen Relativverdrehung der anderen Kupplungshälfte die rotatorisch fest mit dem bewegungsumsetzenden Zwischenglied verbunden ist zumindest im wesentlichen radial, das federnde Zwischenglied spannend oder entspannend, beaufschlagt wird.

Eine Kupplung dieser Art gehört zum nicht vorveröffentlichten Stand der Technik gemäß der EP-A-112 960 veröffentlicht am 11.07.84, die, um Wiederholungen zu vermeiden, ausdrücklich in ihrer Gesamtheit zum Umfang der ursprünglichen Offenbarung der vorliegenden Anmeldung gehörend erklärt wird.

Die Drehmoment-Verdrehwinkel-Kennlinie der Kupplung nach dem Stand der Technik ist dadurch gekennzeichnet, daß sie entsprechend der zunehmenden Rückstellkraft mit zunehmender Verformung des federnden Zwischengliedes unter zunehmender eingeleiteter Arbeit, d. h. mit zunehmendem Drehmoment, mehr oder minder weich progressiv ansteigt. Dieser progressive Anstieg nimmt bei der Verwendung von Elastomerfederpaketen als federndem Zwischenglied mit zunehmendem Drehmoment verstärkt zu. Mit anderen Worten, im Bereich hoher und höchster Lastdrehmomente steht bei bereits großem Gesamtverdrehwinkel der drehelastischen Kupplung für einen vorgegebenen Lastwechselbetrag ein nur noch geringer Verdrehwinkel zur Verfügung. Lastwechselstöße werden also gerade im kritischen Bereich hoher Drehmomente nur noch mäßig abgefedert. Während beispielsweise bei einer für einen speziellen Bereich ausgelegten drehelastischen Kupplung nach dem Stand der Technik im mittleren verfügbaren Verdrehwinkelbereich und Drehmomentenbereich bei einem Lastwechsel von beispielsweise 10 Nm dieser Lastwechsel durch eine Verdrehung der drehelastischen Kupplung um 10° aufgefangen werden kann, kann der gleiche Lastwechselbetrag von 10 Nm nur noch über einen Verdrehwinkel von beispielsweise 2° oder 3° aufgefangen werden. Dies wird als die Verhärtung der Drehmoment-Verdrehwinkel-Kennlinie bezeichnet. Eine solche Verhärtung oder Versteifung der Drehmoment-Verdrehwinkel-Kennlinie ist jedoch gerade im Bereich der hohen Drehmomente unerwünscht, da eine beliebige Anlage, beispielsweise der Antriebsstrang eines Kraftfahrzeugs, im Bereich relativ hoher Drehmomente bereits ohnehin stark belastet ist und gerade in diesem Bereich Lastwechselstöße besonders weich abgefedert werden sollten.

Ausgehend von diesem Stand der Technik liegt der Erfindung die Aufgabe zugrunde, die eingangs beschriebene Kupplung dahingehend zu verbessern, daß die Drehmoment-Verdrehwinkel-Kennlinie im Bereich der jeweiligen Auslegung der Kupplung bei relativ hohen Drehmomenten und entsprechend großem Verdrehwinkel einen weicheren Verlauf aufweist, also flacher verläuft, um dadurch Lastwechselstöße im Bereich großer Drehmomente weicher über einen größeren Verdrehwinkel federnd auffangen zu können, d. h. den effektiv nutzbaren Verdrehwinkelbereich zu vergrößern.

Diese Aufgabe wird durch die Erfindung dadurch gelöst, daß das Auflagerblech der Kupplung als Fliehgewicht ausgebildet oder mit einem Fliehgewicht fest verbunden ist.

Das Auflagerblech kann in einfacher Weise dadurch als Fliehgewicht ausgebildet werden, daß statt des aus Stahlblech hergestellten Auflagerbleches ein relativ dickes und schweres Gußstück als « Auflagerblech » benutzt wird, das dann eingetlich nicht mehr als « Auflagerblech », sondern besser als « Auflager » zu bezeichnen wäre. Um jedoch in der Terminologie der vorliegenden Erfindung ein Höchstmaß an Klarheit zu erzielen, wird auch bei dieser Ausbildung des Auflagers im folgenden von einem « Auflagerblech » gesprochen, das als Fliehgewicht ausgebildet ist.

Alternativ kann das Auflagerblech dadurch als Fliehgewicht ausgebildet werden, daß ein als Auflager dienendes Stahlblech, also ein wirkliches « Auflagerblech » fest mit Fliehgewichten verbunden wird, beispielsweise mit schweren Metallgußteilen verschraubt, vernietet, verlötet oder verschweißt wird.

Beim Betrieb der drehelastischen Kupplung gemäß der Erfindung hat die Ausbildung des Auflagerbleches als Fliehgewicht zur Folge, daß das Auflager für das Koppelglied mit zunehmender Drehzahl der Kupplung mit zunehmender Kraft nach radial auswärts gezwungen wird. Dies hat wiederum eine Entlastung des federnden Zwischengliedes zur Folge und damit eine Verringerung der Rückstellkraft, die zur Kompensation der einwirkenden Drehmomente und zur Herstellung des Drehmomentengleichgewichts erforderlich ist. Dies wiederum bewirkt eine geringere Verformung des federnden Zwischengliedes und damit eine Verringerung des Drehwinkels, der sich für ein bestimmtes Drehmoment einstellt. Mit anderen Worten, bei konstantem Verdrehwinkel und zunehmender Drehzahl kann ein zunehmend größeres Drehmoment von der drehelastischen Kupplung gleichmäßig weich abgefedert werden bzw. wird der für die drehelastische Abfederung bei konstantem Drehmoment mit zunehmender Drehzahl verfügbare Drehwinkel größer, da der sich einstellende Gleichgewichtsverdrehwinkel durch die Entlastung des federnden Zwischengliedes kleiner wird. Lastwechselstöße können also mit der Kupplung gemäß der Erfindung im Bereich relativ hoher Drehmomente, relativ großer Verdrehwinkel und hoher Drehzahlen wesentlich weicher drehelastisch abgefedert werden, als dies bei der Kupplung nach dem Stand der Technik möglich ist.

Nach einer Ausgestaltung der Erfindung ist das bewegungsumsetzende Zwischenglied vorzugsweise ein Exzenterglied oder eine Kurbel und ist das Koppelglied vorzugsweise eine starre Pleuelstange oder Koppelstange. Dabei ist der Lagerzapfen oder der Lagerbolzen, mit dem das Koppelglied an dem als Fliehgewicht ausgebildeten Auflagerblech angelenkt ist, vorzugsweise zumindest einseitig, insbesondere jedoch auf beiden Seiten in einem schlitzartigen Langloch exakt radial geführt, das in einem Seitenblech der Kupplung bzw. in zwei Seitenblechen der Kupplung ausgebildet ist. Diese Seitenbleche können entweder Käfigelemente, Abdeckungselemente, Teile des Zentrierblechs oder Teile des Belagträgerblechs sein. In diesen Blechen kann zusätzlich eine Führung für das Auflagerblech nach Art einer analogen Zapfen-Langloch-Führung vorgesehen sein. Solche Schlitzführungen gewährleisten einen vollkommen symmetrischen Kraftverlauf in der Kupplung und gewährleisten dadurch ein Höchstmaß an Unwuchtunterdrückung. Diese Langlochführungen in den Seitenblechen sind je nach Bedarf entweder so lang ausgelegt, daß sie zumindest gleichlang oder geringfügig länger als der Weg sind, den der Lagerzapfen oder Lagerbolzen des Koppelgliedes bei einem Verdrehwinkel der Kupplung um 180° zurücklegt, oder sind kürzer als dieser Weg ausgebildet, und zwar nach Maßgabe eines vorgegebenen maximal zulässigen Verdrehwinkels der Kupplung, bei dem der drehelastische Kraftschluß zwischen den Kupplungshälften durch einen drehstarren Formschluß und unelastischen Kraftschluß ersetzt werden soll.

Nach einer weiteren Ausgestaltung der Erfindung sind die federnden Zwischenglieder vorzugsweise unter Kompressionsvorspannung zwischen dem als Fliehgewicht ausgebildeten Auflagerblech und der Abstützung an der ersten Kupplungshälfte eingespannt. Dies hat in an sich bekannter Weise ein von vornherein höheres Einsetzen der Drehmoment-VerdrehwinkelKennlinie zur Folge und ist in vielen Anwendungsbereichen, insbesondere im Kraftfahrzeugbau, wünschenswert.

Die besonders verdrehweiche drehelastische Kupplung gemäß der Erfindung wird vorzugsweise im Kraftfahrzeugbau verwendet, und zwar dort im Antriebssystem, insbesondere im Antriebsstrang zwischen der Mitnehmerscheibe und der Abtriebwelle einer Trennkupplung oder als Tilger, insbesondere Niederfrequenztilger.

Die Erfindung ist im folgenden anhand eines Ausführungsbeispiels in Verbindung mit den Zeichnungen näher erläutert. Es zeigen:

Figur 1 in Seitensicht auf die Radialebene, teilweise im Schnitt, ein Ausführungsbeispiel der Kupplung mit einem als Fliehgewicht ausgebildeten Auflagerblech;

Figur 2 einen Schnitt nach II-II in Fig. 1; und

Figur 3 in Parameterdarstellung eine Kennlinienschar für das in den Figuren 1 und 2 gezeigte Ausführungsbeispiel der drehelastischen Kupplung.

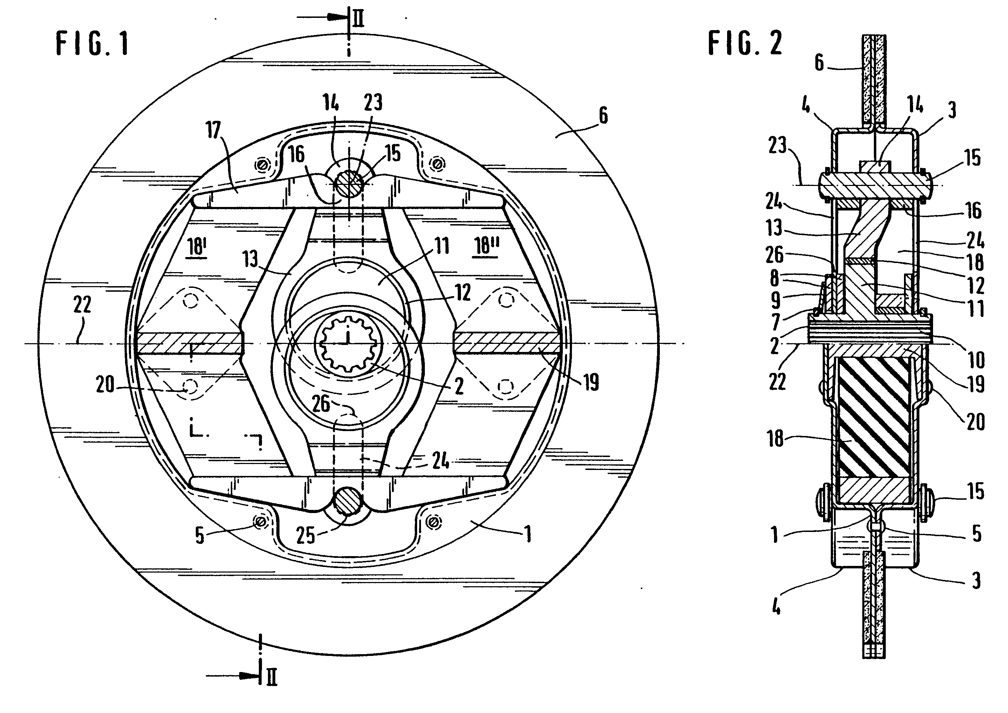

Die in den Fig. 1 und 2 als Ausführungsbeispiel der Erfindung gezeigte drehelastische Kupplung ist als Teil einer Trennkupplung ausgelegt. Die in den Figuren dargestellte Kupplung besteht aus einer ersten Kupplungshälfte 1 und einer zweiten Kupplungshälfte 2, die über Zwischenglieder drehelastisch kraftleitend miteinander verbunden sind. Die beiden Kupplungshälften 1, 2 sind koaxial und zumindest im wesentlichen auch koplanar zueinander angeordnet, und zwar in der Weise, daß die zweite Kupplungshälfte radial innenliegend von der ersten Kupplungshälfte radial außenliegend umschlossen wird.

Die erste Kupplungshälfte 1 weist ein auf einer Seite angeordnetes Zentrier- und Abdeckblech 3 und auf der axial gegenüberliegenden Seite ein ebenfalls zentrierendes und abdeckendes Belagträgerblech 4 auf, die peripher durchNieten 5 fest miteinander verbunden sind. Das Belagträgerblech 4 trägt an seinem Außenrand in üblicher Weise Reibbelagscheiben 6.

Das Zentrierblech 3 und das Belagträgerblech 4 sind beide drehbar auf der als Nabe der Kupplung ausgebildeten inneren Kupplungshälfte 2 axial fixiert. Diese Fixierung erfolgt auf jeder Seite durch einen Sprenging 7, der in eine in der Nabe der Kupplungshälfte 2 ausgebildete Ringnut eingreift. Eine schwimmende Beilagscheibe 8 und eine Reibscheibe 9 vervollständigen die axiale Fixierung des Belagträgerblechs 4. In der in der Fig. 2 nicht dargestellten Weise kann selbstverständlich auch das Zentrierblech 3 in gleicher Weise fixiert sein.

Die als Nabe ausgebildete zweite Kupplungshälfte 2 ist in üblicher Weise mit einer Innenverzahnung 10 versehen, mit der sie auf einer zugeordneten Welle drehfest fixierbar ist.

In dem hier beschriebenen Ausführungsbeispiel der drehelastischen Kupplung erfolgt die drehelastische Verbindung der beiden Kupplungshälften 1,2 miteinander über zwei zueinander parallele Kraftleitungswege, die symmetrisch zueinander ausgebildet sind. Aus Gründen der übersichtlicheren Darstellung ist daher im folgenden nur einer der beiden Kraftleitungswege im einzelnen erläutert.

Drehfest mit der zweiten Kupplungshälfte, im vorliegenden Fall einstückig mit dieser, ist eine Exzenterscheibe 11 angeordnet, auf der über ein Rollkörperlager 12 das untere Pleuelauge eines als Koppelglied dienenden Pleuels 13 gelagert ist. Der Pleuelkopf 14 ist mit seinem gegenüberliegenden Pleuelauge über einen Pleuellagerbolzen 15 mittig in einem Auflager 16 eines Auflagerblechs 17 angelenkt. Das Auflagerblech liegt anvulkanisiert auf zwei zueinander symmetrischen Elastomerfederpaketen 18', 18" auf, die gemeinsam als Teile einer zusammenwirkenden Gummifeder das federnde Zwischenglied 18 der drehelastischen Kupplung bilden. Dieses als Elastomerfeder ausgebildete federnde Zwischenglied 18 ist auf einem Steg 19 abgestützt, der über Nieten 20 fest mit dem Zentrierblech 3 und dem Belagträgerblech 4, also fest mit der ersten Kupplungshälfte 1, verbunden ist. Die Elastomerfeder ist unter Kompressionsvorspannung zwischen dem Auflagerblech 17 und dem Steg 19 eingespannt, wobei das Auflagerblech 17 an Anschlägen der ersten Kupplungshälfte 1 anliegt.

Sowohl im Belagträgerblech 4 als auch im Zentrierblech 3 ist jeweils ein Langloch 24 ausgeschnitten, das vom Pleuellagerbolzen 15, der länger als der Abstand des Zentrierblechs 3 vom Belagträgerblech 4 ist, mit Spiel durchsetzt wird. Die axiale Fixierung des Pleuellagerbolzens 15 erfolgt in dem hier gezeigten Ausführungsbeispiel durch außen aufgesteckte Sprengringe.

Das Langloch 24 ist genau radial ausgerichtet und dient als Schlitzführung für den Pleuellagerbolzen 15. Dabei ist das radial außenliegende eine Ende 25 des Langlochs 24 so gelegt, daß es auf der radialen Mittellinie der Kupplung symmetrisch zwischen den beiden Elastomerteilfederpaketen 18', 18" liegt und bei Anschlag des Auflagerblechs 17 an der ersten Kupplungshälfte 1 den Pleuellagerbolzen 15 gerade anschlagfrei aufnehmen kann. Das gegenüberliegende, also radial innenliegende Ende 26 des Langlochs 24 liegt radial gerade etwas weiter innen als dem radial um weitesten innenliegenden Punkt entspricht, den der Pleuellagerbolzen 15 bei einem Verdrehwinkel der beiden Kupplungshälften gegeneinander von 180° einnehmen kann. Wenn der maximal mögliche Verdrehwinkel der Kupplung beispielsweise aus Sicherheitsgründen auf einen kleineren Wert durch Formschluß begrenzt werden soll, wird das radial innenliegende Ende 26 des Langlochs 24 um einen entsprechenden Betrag weiter nach radial außen verlegt, wird also die Länge des Langlochs 24 verkürzt.

Bei einer Relativverdrehung der ersten Kupplungshälfte 1 gegenüber der zweiten Kupplungshälfte 2 wird der Exzenter 11 aus der in den Figuren 1 und 2 gezeigten Nullage herausgedreht, und zwar je nach Drehrichtung der zweiten Kupplungshälfte 2 nach rechts oder nach links. In beiden Fällen führt dies zu einer Verkürzung des radialen Abstandes zwischen der Mittellinie 22 der zweiten Kupplungshälfte und der Mittellinie 23 des Pleuellagerbolzens 15. Diese Verschiebung des Pleuellagerbolzens 15 nach radial innen erfolgt dabei ohne jede Tangentialkomponente, da der Pleuellagerbolzen 15 im Langloch 24 exakt radial geführt ist. Durch diese Verschiebung des Pleuellagerbolzens 15 nach radial innen wird weiterhin in der Darstellung der Figuren 1 und 2 das Auflagerblech 17 abwärts gegen die Rückstellkraft der vorgespannten Elastomerfeder 18 gezwungen, die unter speichernder Aufnahme der eingeleiteten Arbeit weiter komprimiert wird. Dieses Einleiten der Kompresionsarbeit in das federnde Zwischenglied 18 erfolgt dabei durch die Führung des Pleuellagerbolzens 15 im Langloch 24 in beiden Elastomerteilfedern 18', 18" mit absolut symmetrischer Verteilung, also ohne jede Scherkraft. Dies wiederum hat nicht nur längere Lebensdauer der Elastomerfeder, sondern vor allem auch ein Ausschalten jeglicher Unwucht der Kupplung, insbesondere bei hohen Drehzahlen zur Folge. Bei einer Beaufschlagung der eingangsseitigen Kupplungshälfte mit einem Drehmoment wird die auf diese Weise in die Elastomerfeder eingeleitete Verformungsarbeit von der Elastomerfeder so lange speichernd aufgenommen, bis sich die an den beiden Kupplungshälften wirksamen Drehmomente im Gleichgewicht befinden. Mit anderen Worten, bis zum Eintritt des dynamischen Momentengleichgewichts zwischen Eingangshälfte und Ausgangshälfte der Kupplung wird das an der Ausgangshälfte der Kupplung auftretende Trägheitsmoment durch Umsetzen der in die Eingangshälfte der Kupplung eingeleiteten Arbeit in eine elastische Verformungsarbeit der Elastomerfeder 18 gespeichert. Dabei ist es in erkennbarer Weise gleichgültig, ob die äußere Kupplungshälfte 1 oder die innere Kupplungshälfte 2 die Eingangshälfte oder die Ausgangshälfte der Kupplung ist. Die Funktion der Kupplung ist in beiden Fällen identisch. In beiden Fällen wird der Pleuellagerbolzen der durch das Langloch 24 strikt radial geführt. In beiden Fällen ist lediglich der relative Verdrehwinkel der beiden Kupplungshälften 1,2 gegeneinander ausschlaggebend, also unabhängig von der Drehrichtung und unabhängig vom Kraftfluß.

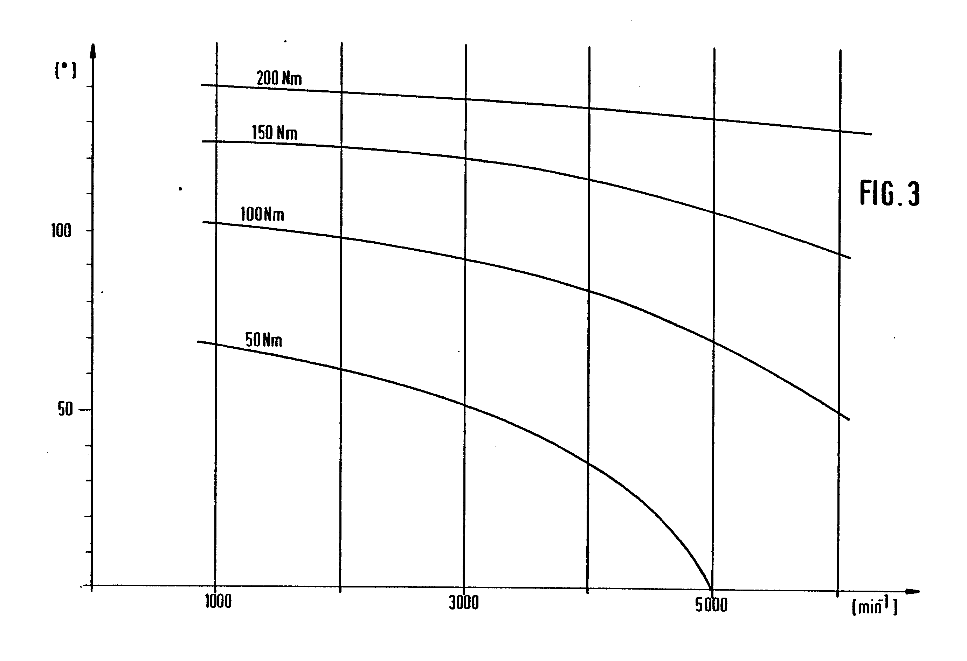

In der insbesondere aus Fig. 1 ersichtlichen Weise ist das Auflagerblech 17 als relativ dickes und schweres Gußteil oder Schmiedeteil ausgebildet, so daß das Auflagerteil insgesamt aufgrund seiner beachtlichen trägen Masse als Fliehgewicht wirkt. Dem bei Einleiten einer Arbeit in die Kupplung durch ein Verdrehen der beiden Kupplungshälften 1 und 2 gegeneinander bewirkten Herabziehen der Auflagerbleche 17 zum Mittelpunkt der Kupplung hin wirkt die durch die Fliehmasse der Auflagerbleche 17 hervorgerufene Fliehkraft nach radial außen im Sinne einer Verkleinerung des Drehwinkels entgegen, der sich jeweils im Drehmomentengleichgewicht einstellt. Wie groß der sich dabei schließlich einstellende Drehwinkel letztendlich ist, läßt sich bei vorgegebenen Kenndaten des Federnden Zwischengliedes in einfachster Weise durch die Bemessung der trägen Masse des Auflagerblechs 17 einstellen. Durch eine Abstimmung der Fliehmasse des Auflagerblechs 17, der Federkenndaten des federnden Zwischengliedes 18 und der Exzentrizitätsverhältnisse des Exzenters 11 sowie der Länge und der Anlenkpunkte des Pleuels 13 läßt sich die solcherart aufgebaute Kupplung mit praktisch beliebigen Kennlinien praktisch beliebig fein abstimmen. Dem Anwendungskonstrukteur stehen hier für jeden einzelnen Anwendungsfall mit einfachen Mitteln ausreichende Möglichkeiten für eine optimale Abstimmung der Kennlinien für den jeweils spezifischen Anwendungsfall zur Verfügung.. Für die in den Figuren 1 und 2 dargestellte verdrehweiche drehelastische Kupplung aus dem Bereich des Kraftfahrzeugbaus ist die Kennlinienschar in der Fig. 3 wiedergegeben, und zwar die Verdrehwinkel-Drehzahl-Kennlinienschar in der Darstellung mit konstantem Drehmoment als Parameter.

Der Fig. 3 ist zunächst ohne weiteres entnehmbar, daß aufgrund des als Fliehgewicht ausgebildeten Auflagerblechs 17 der sich im Drehmomentengleichgewicht einstellende Verdrehwinkel für ein bestimmtes Drehmoment mit zunehmender Drehzahl kleiner wird, und zwar aufgrund der Entlastung der federnden Zwischenglieder 18 unter der Wirkung der Fliehkraft, die durch die Fliehmasse des Auflagerblechs 17 aufgebracht wird. So stellt sich im Drehmomentengleichgewicht beispielsweise bei einer Drehzahl der Kupplung von 1 000 min⁻¹ bei einem übertragenen Drehmoment von 50 Nm ein Verdrehwinkel der beiden Kupplungshälften 1,2 gegeneinander von rund 70° ein. Bei einer Drehzahl von 5 000 min⁻¹ dagegen, beträgt der Verdrehwinkel unter sonst identischen Bedingungen praktisch nur noch 0°, ist die Kupplung also unter der Wirkung der Fliehmassen praktisch in ihre Null-Lage zurückgedreht.

Umgekehrt kann bei einem Verdrehwinkel von rund 70°, bei dem bei einer Drehzahl von 1 000 min⁻¹ im Momentengleichgewicht ein Drehmoment von 50 Nm übertragen werden kann, bei einer Drehzahl von rund 5 500 min⁻¹ das doppelte Drehmoment, nämlich ein Drehmoment von 100 Nm, übertragen werden. Da jedoch mit zunehmendem Verdrehwinkel die Kompression des federelastischen Zwischengliedes größer wird und damit die Drehmoment-Verdrehwinkel-Kennlinie zunehmend steifer wird, also steiler ansteigend verläuft, bedeutet dies, daß für einen vorgegebenen Betrag eines Drehmomentlastwechselstoßes bei einem Drehmoment von 100 Nm und einer Drehzahl von 5 500 min⁻¹ noch die gleiche Verdrehwinkeländerung, also die gleiche Drehelastizität zur Verfügung steht, die bei einer Drehzahl von nur 1 000 min⁻¹ für nur das halb so große Drehmoment von 50 Nm verfügbar ist. Die Kupplung zeigt also im Bereich höherer Drehzahlen und höherer Belastungen, also höherer Drehmomente, gegenüber Lastwechselstößen eine größere Verdrehweichheit als die Kupplung nach dem Stand der Technik, bei der das Auflagerblech 17 mit vernachlässigbarer Masse aus einem relativ dünnen Stahlblech hergestellt ist.

Diese Verhältnisse können der Fig. 3 auch direkt entnommen werden. So steht beispielsweise bei einer Drehzahl von 1 000 min⁻¹ zum Auffangen eines Lastwechselstoßes von 100 Nm auf 150 Nm eine Drehwinkelveränderung von rund 25° zur Verfügung. Bei einer Drehzahl von 6 000 min⁻¹ steht dagegen für denselben Lastwechselstoß eine Verdrehwinkeländerung von rund 45° zur Verfügung, so daß also die hier als Ausführungsbeispiel erläuterte Kupplung in Umkehrung der Verhältnisse bei der Kupplung nach dem Stand der Technik bei höheren Drehzahlen sogar verdrehweicher als bei niedrigeren Drehzahlen ist. Dabei ist dem Fachmann ohne weiteres ersichtlich, daß er diese Verhältnisse ohne weiteres beispielsweise auch so anpassen kann, daß die Kupplung über den gesamten Drehzahlbereich eine praktisch konstante Verdrehweichheit aufweist. Wie bereits vorstehend erläutert, sind solche Abstimmungen der Kupplung bzw. solche Einstellungen der Kennlinienschar mit einfachsten Mitteln vom Fachmann ohne weiteres selbst, abgestimmt auf den einzelnen Anwendungsfall, durchführbar.

## Patentansprüche

1. Drehelastische Kupplung, bei der zwei gegeneinander verdrehbare Kupplungshälften (1, 2) über mindestens ein federndes Zwischenglied (18) und, unter Bezug auf den Kraftleitungsweg durch die Kupplung, in Serie zu diesem federnden Zwischenglied über mindestens ein eine Rotation in eine Translation oder umgekehrt, eine Translation in eine Rotation umsetzendes bewegungsumsetzendes Zwischenglied (11) kraftleitend miteinander verbunden sind, und mit mindestens einem Auflagerblech (17), das radial außen auf mindestens einem radial innen Kraftschlüssig abgestützten mit einer ersten der beiden Kupplungshälften (1) verbundenen federnden Zwischenglied (18) aufliegt und an dem das bewegungsumsetzende Zwischenglied (11) direkt oder über mindestens ein Koppelglied (13) translatorisch in der Weise angelenkt ist, daß das Auflagerblech (17) bei einer auf die erste Kupplungshälfte bezogenen Relativverdrehung der anderen Kupplungshälfte, die rotatorisch fest mit dem bewegungsumsetzenden Zwischenglied (11) verbunden ist, zumindest im wesentlichen radial, das federnde Zwischenglied (18) spannend oder entspannend, beaufschlagt wird, dadurch gekennzeichnet, daß das Auflagerblech (17) als Fliehgewicht ausgebildet oder mit einem Fliehgewicht fest verbunden ist.

2. Drehelastische Kupplung nach Anspruch 1, dadurch gekennzeichnet, daß das bewegungsumsetzende Zwischenglied eine Exzenterscheibe (11) oder eine Kurbel ist und daß das Koppelglied (13) eine starre Pleuelstange oder Koppelstange ist.

3. Drehelastische Kupplung nach einem der Ansprüche 1 oder 2, wobei zumindest auf einer Seite der Koppelglieder ein Seitenblech (3, 4) vorgesehen ist, das drehfest mit der Kupplungshälfte (1) verbunden ist, an der auch das oder die federnden Zwischenglieder (18) drehfest gehalten sind, gekennzeichnet durch ein radial ausgerichtetes Langloch (24) im Seitenblech (3, 4), durch das ein Lagerzapfen oder Lagerbolzen (15) hindurchgreift, mit dem das Koppelglied (13) oder der translatorische Ausgang des bewegungsumsetzenden Zwischengliedes (11) an dem Auflagerblech (17) angelenkt ist.

4. Kupplung nach einem der Ansprüche 1 bis 3, dadurch gekennzeichnet, daß die Länge des Langlochs (24) zumindest gleich der Länge des Weges ist, den der Lagerzapfen oder Lagerbolzen (15) in dem Langloch (24) bei einer Relativverdrehung der beiden Kupplungshälften gegeneinander von 0° bis 180° zurücklegt.

5. Kupplung nach einem der Ansprüche 1 bis 3, dadurch gekennzeichnet, daß das eine Ende (25) des Langlochs (24) so angeordnet ist, daß das Langloch den Lagerzapfen oder Lagerbolzen (15) in der Nullstellung der Kupplung, also bei einem Verdrehwinkel der beiden Kupplungshälften gegeneinander von 0°, gerade anschlagfrei oder mit vernachlässigbar geringem Anschlag aufnehmen kann, während das gegenüberliegende Ende (26) des Langlochs (24) so liegt, daß der Lagerzapfen oder Lagerbolzen anschlägt, bevor der Verdrehwinkel der Kupplung 180° beträgt.

6. Drehelastische Kupplung nach einem der Ansprüche 1 bis 5, dadurch gekennzeichnet, daß mindestens eines der federnden Zwischenglieder (18) zwischen dem Auflagerblech (17) und der Abstützung (19) an der ersten Kupplungshälfte (1) unter Kompressionsvorspannung eingespannt ist.

7. Drehelastische Kupplung nach einem der Ansprüche 1 bis 6, dadurch gekennzeichnet, daß die Koppelglieder zugfeste oder begrenzt zugelastische biegbare Zugglieder sind.

8. Drehelastische Kupplung nach einem der Ansprüche 1 bis 7, dadurch gekennzeichnet, daß das bewegungsumsetzende Zwischenglied und das Koppelglied (13) so miteinander verbunden sind, daß das federnde Zwischenglied (18) bei einer Relativverdrehung der beiden Kupplungshälften (1, 2) gegeneinander mit einer Kompressionskraft beaufschlagt wird.

9. Verwendung der Kupplung nach einem der Ansprüche 1 bis 8 im Kraftfahrzeugbau, und zwar im Antriebssystem, insbesondere zwischen der Mitnehmerscheibe und der Abtriebswelle einer Trennkupplung, und als Tilger, insbesondere Niederfrequenztilger.

**Claims**

1. A rotationally elastic coupling, in which two mutually rotatable half couplings (1, 2) are connected with one another so as to transmit force by means of at least one resilient intermediate link (18) and, in series with this resilient intermediate link in terms of the force transmission path through the coupling, by means of at least one movement-converting intermediate link (11) converting a rotation into a translational movement or, vice versa, a translational movement into a rotation, with at least one sheet metal support (17) which is in contact at a radially outward position with at least one resilient intermediate link (18) which is connected in frictional support at a radially inward position to a first of the two half-couplings (1) and to which the movement-converting intermediate link (11) is linked in a translatery way directly or by at least one coupling link (13) in such a way that the sheet metal support (17) in the event of a relative rotation, relative to the first half-coupling, of the other half-coupling, of the other half-coupling which is rotationally solidly connected with the movement-converting intermediate link (11), is subjected to an at least substantially radial force which strains or relieves the resilient intermediate link (18), wherein the sheet metal support (17) is formed as a centrifugal weight or solidly connected to a centrifugal weight.

2. A rotationally elastic coupling according to claim 1, wherein the movement-converting intermediate link is an excentric disc (11) or a crank and wherein the coupling link (13) is a solid connection rod or coupling rod.

3. A rotationally elastic coupling according to one of the claims 1 or 2 with a lateral sheet metal (3, 4) provided at at least one side of the coupling links which is connected rotationally solidly with the first half-coupling (1) with which the resiliant intermediate link (18) is, or the resilient intermediate links (18) are, connected rotationally solidly, too, wherein a radially extending long hole (24) in the lateral sheet metal (3, 4) is provided into which a bearing neck or bearing bolt (15) is protruding, by which the coupling link (13) or the translational output of the movement-converting intermediate link (11) is linked to the sheet metal support (17).

4. A coupling according to one of the claims 1 to 3, wherein the long hole (24) has at least the same length as the way of the bearing neck or bearing bolt (15) within the long hole (24) when the two half-couplings are rotated relative to each other from zero to 180°.

5. A coupling according to one of the claims 1 to 3, wherein a first front end (25) of the long hole (24) is positioned in such a way that, in a neutral position of the coupling, which means that a rotational angle between the two half-couplings is 0°, the long hole can take up the bearing neck or bearing bolt (15) without having the effect of end-stop means, while the opposite front end (26) of the long hole (24) is positioned in such a way that it has the effect of end-stop means before the rotational angle of the coupling reaches 180°.

6. A rotationally elastic coupling according to one of the claims 1 to 5, wherein at least one of the resiliant intermediate links (18) between the sheet metal support (17) and the support point (19) at the first half-coupling (1) is pre-stressed in compression.

7. A rotationally elastic coupling according to one of the claims 1 to 6, wherein the coupling links are bendable tension links which are solid in tension or elastic in tension with limitation.

8. A rotationally elastic coupling according to one of the claims 1 to 7, wherein the movement-converting intermediate link and the coupling link (13) are connected to one another in such a way that, when the two half coupling (1, 2) are rotated relative to one another, the resiliant intermediate link (18) is subjected to a compressive force.

9. Use of the coupling according to one of the claims 1 to 8 in motor vehicle construction, namely in the propulsion system, particularly between the clutch plate and the output shaft of a clutch and as a suppressor, particularly a low frequency suppressor.

**Revendications**

1. Accouplement élastique à rotation dans lequel deux moitiés d'accouplement (1, 2), qui peuvent tourner l'une par rapport à l'autre, sont reliées mécaniquement l'une à l'autre, de manière à transmettre les efforts, par au moins un organe intermédiaire élastique (18), et, en ce qui concerne le trajet de transmission des efforts par l'accouplement, en série avec cet organe intermédiaire élastique par l'intermédiaire d'au moins un organe intermédiaire (11) transformateur de mouvement, qui transforme une rotation en une translation, et, inversement, une translation en une rotation, et qui comporte au moins une tôle d'appui (17) qui s'applique, extérieurement dans le sens radial, sur au moins un organe intermédiaire élastique (18), qui prend mécaniquement appui intérieurement dans le sens radial et est relié à l'une des deux moitiés d'accouplement (1) et sur laquelle l'organe intermédiaire (11) transformateur de mouvement s'articule directement ou par l'intermédiaire d'au moins un organe d'accouplement (13), pour des mouvements de translation, de telle manière que, pour un mouvement de rotation de la deuxième moitié d'accouplement par rapport à la première moitié d'accouplement, solidement reliée, pour la rotation, à l'organe intermédiaire (11) transformateur de mouvement, la tôle d'appui (17) est soumise à une action au moins essentiellement dans le sens radial, en tendant ou en détendant l'organe intermédiaire élastique (18), caractérisé en ce que la tôle d'appui (17) constitue une masse centrifuge ou est solidaire d'une masse centrifuge.

2. Accouplement élastique à rotation selon la revendication 1, caractérisé en ce que l'organe intermédiaire transformateur de mouvement est un disque d'excentrique (11) ou une manivelle, et en ce que l'organe d'accouplement (13) est une bielle ou une barre d'accouplement rigide.

3. Accouplement élastique à rotation selon l'une des revendications 1 ou 2, dans lequel l'un des côtés au moins des organes d'accouplement comporte une tôle latérale (3, 4) qui est reliée, sans rotation relative possible, à la moitié d'accouplement (1) sur laquelle le ou les organes intermédiaires élastiques (18) sont maintenus, également sans rotation relative possible, caractérisé en ce qu'un trou oblong (24), ménagé dans le sens radial dans la tôle latérale (3, 4), est traversé par un tenon ou boulon de palier (15) par lequel l'organe d'accouplement (13) ou la sortie de translation de l'organe intermédiaire (11) transformateur de mouvement s'articule sur la tôle d'appui (17).

4. Accouplement selon l'une des revendications 1 à 3, caractérisé en ce que la longueur du trou oblong (24) est au moins égale à la longueur du trajet que le tenon ou le boulon (15) de palier parcourt dans le trou oblong (24) lorsque les deux moitiés d'accouplement tournent de 0° à 180° l'une par rapport à l'autre.

5. Accouplement selon l'une des revendications 1 à 3, caractérisé en ce que l'une des extrémités (25) du trou oblong (24) est disposée de telle manière que le trou oblong peut, dans la position zéro de l'accouplement, c'est-à-dire pour un angle de rotation de 0° entre les deux moitiés d'accouplement, recevoir le tenon ou le boulon de palier de l'organe d'accouplement sans butée, ou avec une faible butée pratiquement négligeable, tandis que l'extrémité opposée (26) du tube oblong est disposée de telle manière que le tenon ou goujon (15) de palier vient buter contre cette extrémité du trou oblong avant que l'angle de rotation relative des parties de l'accouplement n'atteigne 180°.

6. Accouplement élastique à rotation selon l'une des revendications 1 à 5, caractérisé en ce que l'un au moins des organes intermédiaires élastiques (18) est tendu, avec précontrainte de compression, entre la tôle d'appui (17) et l'appui (19) sur la première moitié d'accouplement (1).

7. Accouplement élastique à rotation selon l'une des revendications 1 à 6, caractérisé en ce que les organes d'accouplement (13) sont des organes de traction résistant à la traction ou élastiques à la traction et souples.

8. Accouplement élastique à rotation selon l'une des revendications 1 à 7, caractérisé en ce que l'organe intermédiaire (11) transformateur de mouvement et l'organe d'accouplement (13) sont reliés l'un à l'autre de telle manière qu'au cours d'une rotation relative des deux moitiés d'accouplement (1, 2), l'organe intermédiaire élastique (18) est soumis à une force de compression.

9. Utilisation de l'accouplement selon l'une des revendications 1 à 8 en construction automobile, surtout dans le système de commande, en particulier entre le disque d'entraînement et l'arbre de commande d'un accouplement dissociable, et comme amortisseur, notamment comme amortisseur de basse fréquence.

FIG. 1

FIG. 2

0 134 299

FIG.3

0 134 299